# EUROPEAN PATENT APPLICATION

(11) **EP 0 541 180 A2**
(43) Date of publication of application: **12.05.1993**
(21) Application number: 92203401.2
(22) Date of filing: 05.11.1992
(51) Int. Cl.: C08F 297/04, C10M 143/10

(54) **Star polymers, a process for their preparation and lubricating oil compositions and concentrates containing them**

(30) Priority: 08.11.1991 US 790610
(71) Applicant: SHELL INTERNATIONALE RESEARCH MAATSCHAPPIJ B.V., NL-2596 HR Den Haag (NL)
(72) Inventor: Rhodes, Robert Barnett, Houston, Texas 77070 (US); Gorman, John Eugene, Houston, Texas 77069 (US); Atwood, Harvey Emerson, Kingwood, Texas 77345 (US)

(57) **Abstract**

The present invention provides star polymers, useful as lubricating oil viscosity index improvers, produced by the process comprising the steps of:
(a) anionically polymerising isoprene and styrene to produce block copolymer molecules, each block copolymer molecule having an A-B structure wherein B is a block of polyisoprene having a number average molecular weight (MW_{I}) in the range from 30,000 to 70,000 and A is a block of polystyrene having a number average molecular weight (MW_{S}) in the range from 4,000 - (MW_{I}/30) to 3000 + (MW_{I}/30);
(b) coupling the block copolymer molecules with 2.5 or more moles of polyalkenyl coupling agent per mole of block copolymer molecules, to form a star polymer; and
(c) selectively hydrogenating the star polymer such that at least 95% of isoprene units (olefinic unsaturation) and less than 15% of styrene units (aromatic unsaturation) are hydrogenated;
a process for their preparation; and lubricating oil compositions and lubricating oil concentrates containing them.

## Description

This invention relates to star polymers, a process for their preparation, and lubricating oil compositions and lubricating oil concentrates containing them.

The viscosity of lubricating oils varies with temperature. In general, oils are identified by a viscosity index which is a function of the oil viscosity at a given lower temperature and a given higher temperature. The given lower temperature and the given higher temperature have varied over the years but are fixed at any given time in an ASTM test procedure (ASTM D2270). Currently, the lower temperature specified in the test is 40°C and the higher temperature specified in the test is 100°C.

Numerous methods have been proposed for improving the rheological properties of lubricating oil compositions. Generally, these methods involve the use of a polymeric additive which cannot be handled as a solid. More recently, it has been discovered that certain asymmetric star polymers are both solid polymers and effective VI improvers for lubricating oil compositions as disclosed in United States Patent No. 4,849,481. The patent describes asymmetric star polymers of conjugated diolefin blocks, such as polyisoprene, and monoalkenyl aromatic blocks, such as polystyrene. The star polymers contain a substantial amount of the monoalkenyl aromatic blocks and produce oil compositions having reduced high temperature, high shear rate (HTHSR) viscosities. The asymmetric star polymers have sufficient amounts of the monoalkenyl aromatic blocks to be cyclone finishable as a polymer crumb.

Although reduced HTHSR viscosities likely indicate good fuel efficiency, increased HTHSR viscosities are needed for high performance engines which operate at higher temperatures and rpms, or for engines having marginally designed journal bearings. Minimum HTHSR viscosities have been proposed as an industry standard. Star polymers having a sufficiently low amount of the monoalkenyl aromatic blocks to have a high HTHSR viscosity were not expected to have a sufficient amount of the monoalkenyl aromatic blocks to be cyclone finishable as a polymer crumb or were expected to cause gelation.

Process oils which detract from VI improver properties often must be added to non-cyclone finishing polymers in order to finish the polymers by falling strand methods. For this reason, star polymers having low amounts of the monoalkenyl aromatic blocks were not specifically described or claimed in United States Patent No. 4,849,481. Figure 1 of the patent does suggest that oil compositions such as multigrade SAE 10W-40 (graded according to the SAE J300 standard of the SAE Engine Oil Viscosity Classification System) can be produced with the asymmetric star polymers having a low monoalkenyl aromatic block content. However, the patent does not suggest that the star polymers having low amounts of the monoalkenyl aromatic blocks would be both cyclone finishable and useful in preparing oil compositions having higher HTHSR viscosities.

Therefore, in accordance with the present invention, there is provided a star polymer produced by the process comprising the steps of:
(a) anionically polymerising isoprene and styrene to produce block copolymer molecules, each block copolymer molecule having an A-B structure wherein B is a block of polyisoprene having a number average molecular weight (MW_{I}) in the range from 30,000 to 70,000 and A is a block of polystyrene having a number average molecular weight (MW_{S}) in the range from 4,000 - (MW_{I}/30) to 3000 + (MW_{I}/30);
(b) coupling the block copolymer molecules with 2.5 or more moles of polyalkenyl coupling agent per mole of block copolymer molecules, to form a star polymer; and
(c) selectively hydrogenating the star polymer such that at least 95% of isoprene units (olefinic unsaturation) and less than 15% of styrene units (aromatic unsaturation) are hydrogenated.

The star polymer viscosity index (VI) improvers of the present invention are produced by coupling living block copolymer molecules having specific structures. The living molecules consist essentially of a polystyrene block connected to a living block of polyisoprene, wherein the polyisoprene block has a number average molecular weight (MW_{I}) from 30,000 to 70,000, preferably from 30,000 to 60,000 and especially from 40,000 to 60,000, and the styrene block has a number average molecular weight (MW_{S}) from 4,000 - (MW_{I}/30) to 3,000 + (MW_{I}/30), preferably from 3,000 to 4,000. The living polymer molecules are coupled with a polyalkenyl coupling agent such as divinylbenzene wherein the molar ratio of divinylbenzene to living polymer molecules is at least 2.5:1, preferably at least 3:1. The star polymer is then selectively hydrogenated to saturate at least 95%, preferably at least 98%, of the isoprene units (olefinic unsaturation) and less than 15%, preferably less than 10%, of the styrene units (aromatic unsaturation).

Accordingly, the present invention further provides a process for the preparation of a star polymer according to the present invention, comprising the steps of:
(a) anionically polymerising isoprene and styrene to produce block copolymer molecules, each block copolymer molecule having an A-B structure wherein B is a block of polyisoprene having a number average molecular weight (MW_{I}) in the range from 30,000 to 70,000 and A is a block of polystyrene having a number average molecular weight (MW_{S}) in the range from 4,000 - (MW_{I}/30) to 3000 + (MW_{I}/30);
(b) coupling the block copolymer molecules with 2.5 or more moles of polyalkenyl coupling agent per mole of block copolymer molecules, to form a star polymer; and
(c) selectively hydrogenating the star polymer such that at least 95% of isoprene units (olefinic unsaturation) and less than 15% of styrene units (aromatic unsaturation) are hydrogenated.

The star polymers of the present invention are readily produced by the processes described in Canadian Patent No. 716,645 and United States Patent No. Re 27,145. However, the star polymers of the present invention have molecular weights not taught by the references.

When the number average molecular weight of each polyisoprene block is at least about 75,000, the star polymers are cyclone finishable as a solid crumb in the absence of blocks of polystyrene. However, the longer hydrogenated polyisoprene blocks are prone to shearing when used as a VI improver. On the other hand, star polymers having polyisoprene blocks with number average molecular weights less than 30,000 may require excessively large polystyrene blocks to be cyclone finishable and do not provide a suitable low temperature oil viscosity. All number average molecular weights recited herein are determined from a conventional gel permeation chromotography (GPC) curve unless stated otherwise.

It was previously expected that the minimum size of polystyrene blocks that would allow cyclone finishing would substantially lower the high temperature, high shear rate (HTHSR) viscosity of lubricating oil compositions containing the star polymers. The present invention includes the suprising discovery that cylcone finishable star polymers having high HTHSR viscosities and good low temperature performance can be prepared by limiting the size of the polystyrene blocks.

The star polymers of this invention which are useful as VI improvers are prepared by anionically polymerising polystyrene in the presence of an initiator such as sec-butyllithium, adding isoprene to the living polystyrene molecules to making living block copolymer molecules, coupling the living block copolymer molecules with a polyalkenyl coupling agent to form a star polymer, and selectively hydrogenating the polyisoprene blocks. The star polymers of the present invention may be characterised prior to hydrogenation as having a dense centre or nucleus of crosslinked poly(polyalkenyl coupling agent) and a number of block copolymer arms extending outwardly therefrom. The number of arms, as determined by conventional gel permeation chromotography (GPC), may vary considerably but is typically in the range from 6 to 13.

The star polymers of this invention may be represented by the general formula (A-B)ₙ-X wherein A-B is a block copolymer comprising a single block A of polystyrene and a single block B of hydrogenated polyisoprene, n is the number of block copolymer arms in the star polymer, and X is the poly(polyalkenyl coupling agent) nucleus.

In general, the star polymers may be hydrogenated using any of the techniques known in the prior art to be suitable for selective hydrogenation of olefinic unsaturation over aromatic unsaturation. The hydrogenation conditions must be sufficient to hydrogenate at least 95% of the original olefinic unsaturation. Hydrogenation of aromatic unsaturation must be less than 15% to avoid reduction of the amount of polystyrene needed to finish the star polymers.

In general, hydrogenation involves the use of a suitable catalyst as described in U.S. Patent No. Re 27,145. A mixture of nickel ethylhexanoate and triethylaluminium having from 2 to 3 moles of aluminium per mole of nickel is preferred.

In a preferred embodiment of the present invention, a star polymer is produced by anionically polymerising styrene and then isoprene to produce living polystyrene-polyisoprene-Li molecules. The polyisoprene blocks preferably have a number average molecular weight from 30,000 to 60,000 and the polystyrene blocks preferably have a number average molecular weight from 3,000 to 4,000. The living block copolymer molecules are coupled with divinylbenzene using 3 moles of divinylbenzene per mole of copolymer molecules. The coupled polymers are selectively hydrogenated with a solution of nickel ethylhexanoate and triethylaluminium having a Al/Ni ratio of about 2.5:1 to saturate at least 98% of the isoprene units and less than 10% of the styrene units.

Such star polymers are cyclone finishable as a polymer crumb and produce lubricating oil compositions having a good balance of high and low temperature viscosities suitable for high performance engines.

The hydrogenated star polymers of this invention may be added to a variety of lubricating oils to improve viscosity index characteristics. Accordingly, the present invention further provides a lubricating oil composition comprising a major amount of a lubricating oil and a minor amount, preferably from 0.05 to 10%w, more preferably from 0.2 to 5%w, and especially from 0.5 to 2.5%w, of a star polymer according to the present invention, all percentages by weight based on total composition.

Suitable lubricating oils are natural, mineral or synthetic lubricating oils.

Natural lubricating oils include animal and vegetable oils, such as castor oil. Mineral oils comprise the lubricating oil fractions derived from crude oils, coal or shale, which fractions may have been subjected to certain treatments such as clay-acid, solvent or hydrogenation treatments. Synthetic lubricating oils include synthetic polymers of hydrocarbons, modified alkylene oxide polymers, and ester lubricants, which are known in the art. These lubricating oils are preferably crankcase lubricating oils for spark-ignition and compression-ignition engines, but include also hydraulic lubricants, metal-working fluids and automatic transmission fluids.

Preferably the lubricating base oil component of the compositions according to the present invention is a mineral lubricating oil or a mixture of mineral lubricating oils, such as those sold by member companies of the Royal Dutch/Shell Group under the designations "HVI", or "XHVI" (Trade Mark).

The viscosity of the lubricating base oils present in the compositions according to the present invention may vary within wide ranges, and is generally from 3 to 35 mm²/s at 100°C.

Lubricating oil compositions prepared with the selectively hydrogenated star polymers of this invention may also contain other additives such as anti-corrosive additives, antioxidants, detergents, pour point depressants and one or more additional VI improvers. Typical additives which are useful in the lubricating oil compositions of this invention and their description will be found in U.S. Patents Nos. 3,772,196 and 3,835,083.

The present invention still further provides a lubricating oil concentrate comprising from 10 to 80%w, based on the total concentrate, of a star polymer according to the present invention. Such a concentrate generally comprises an inert carrier fluid and one or more additives in a concentrated form. The inert carrier fluid is conveniently a lubricating oil.

The present invention still further provides a process for preparing a lubricating oil composition which comprises mixing a lubricating base oil with a star polymer according to the present invention, or with a lubricating oil concentrate in accordance with the present invention.

The invention will be further understood from the following illustrative examples.

### Example 1

In this example, a star polymer consisting essentially of arms of a block copolymer containing a single block of polystyrene and a single block of hydrogenated polyisoprene was prepared. In the first step of the preparation, living molecules of polystyrene were prepared by anionically polymerising styrene in cyclohexene. The polymerisation of styrene was initiated by adding sec-butyllithium. The polymerisation of the styrene was completed to produce living polystyrene molecules having a number average molecular weight of 3,100. Polyisoprene blocks were then formed by adding isoprene to the solution of living polystyrene molecules. The polymerisation of isoprene was completed to produce polyisoprene blocks having a number average molecular weight of 53,400.

The living block copolymer arms were then coupled with divinylbenzene using 3 moles of divinylbenzene per mole of the living block copolymer molecules. The coupling reaction was allowed to proceed to completion after which the lithium sites remaining in the star polymer were deactivated by adding an alcohol. The star polymer was next hydrogenated so as to saturate

greater than 98% of the olefinic unsaturation originally contained in the isoprene blocks and less than 15% of the aromatic unsaturation using a catalyst prepared by combining nickel ethylhexanoate and triethylaluminium (2.3 moles of aluminium per mole of nickel). The melt viscosity of the star polymer was sufficiently high to permit finishing as a solid polymer crumb. The melt viscosity of the star polymer was 38.2 megapoise (x 10⁵ Pa s) at 250°F (121.1°C). The data and results are summarised in Table 1.

### Example 2

In this example, a star polymer consisting essentially of arms of a styrene/isoprene block copolymer was prepared using the procedure summarised in Example 1 except that the number average molecular weight of the polystyrene blocks was 3,720 and the number average molecular weight of the polyisoprene blocks was 46,300. The melt viscosity of the star polymer was 36.2 megapoise (x 10⁵ Pa s) at 250°F (121.1°C). The data and results are summarised in Table 1.

### Example 3

In this example, a star polymer consisting essentially of arms of a styrene/isoprene block copolymer was prepared using the procedure summarised in Example 1 except that the number average molecular weight of the polystyrene blocks was 4,610 and the number average molecular weight of the polyisoprene blocks was 51,200. The melt viscosity of the star polymer was 48.5 megapoise (x 10⁵ Pa s) at 250°F (121.1°C). The data and results are summarised in Table 1.

### Comparative Example A

In this comparative example, a star polymer consisting essentially of arms of a styrene/isoprene block copolymer was prepared using the procedure summarised in Example 1 except that the number average molecular weight of the polystyrene blocks was 2,200 and the number average molecular weight of the polyisoprene blocks was 41,500. The melt viscosity of the star polymer was 5.0 megapoise (x 10⁵ Pa s) at 250°F (121.1°C). The data and results are summarised in Table 1.

### Comparative Example B

In this comparative example, a star polymer consisting essentially of arms of a styrene/isoprene block copolymer was prepared using the procedure summarised in Example 1 except that the number average molecular weight of the polystyrene blocks was 2,200 and the number average molecular weight of the polyisoprene blocks was 48,100. The melt viscosity of the star polymer was 12.3 megapoise (x 10⁵ Pa s) at 250°F (121.1°C). The data and results are summarised in Table 1.

### Comparative Example C

In this comparative example, a star polymer consisting essentially of arms of a styrene/isoprene block copolymer was prepared using the procedure summarised in Example 1 except that the number average molecular weight of the polystyrene blocks was 5,750 and the number average molecular weight of the polyisoprene blocks was 54,000. The melt viscosity of the star polymer was 69.4 megapoise (x 10⁵ Pa s) at 250°F (121.1°C). The data and results are summarised in Table 1.

**TABLE 1**

| Example | Styrene Mw_{S} | Isoprene MW_{I} | Finishable as Solid Crumb | Melt Viscosity 250°F (121.1°C) M Poise (x 10⁵ Pa s) |
|---|---|---|---|---|
| 1 | 3,100 | 53,400 | Yes | 38.2 |
| 2 | 3,720 | 46,300 | Yes | 36.2 |
| 3 | 4,610 | 51,200 | Yes | 48.5 |
| COMP. A* | 2,200 | 41,500 | No | 5.0 |
| COMP. B* | 2,200 | 48,100 | No | 12.3 |
| COMP. C* | 5,750 | 54,000 | Yes | 69.4 |

| | | | | |
|---|---|---|---|---|
| * COMP. A, COMP. B and COMP. C are comparative examples as the molecular weights (Mₙ) of the polystyrene blocks are, in the case of COMP. A and COMP. B, below, and in the case of COMP. C, above, the polystyrene molecular weight (Mₙ) range of 4000-(MW_{I}/30) to 3000 + (MW_{I}/30). | | | | |

### Examples 4-6

In these examples the star polymers produced in Examples 1-3 were used as VI improvers in a SAE 10W-40 multigrade lubricating oil composition. The base stock used in the preparation of the multigrade lubricating oil composition was a blend of an "HVI 100N" oil (trade designation, available ex Shell Oil Company, USA) (a bright and clear high viscosity index base oil having viscosity at 40°C of 20.0 to 21.0 mm²/s (ASTM D445), viscosity index of 88 to 93 (ASTM D2270) and minimum flash point of 190.6 to 196°C (ASTM D92)) and an "HVI 250N" oil (trade designation, available ex Shell Oil Company, USA)(a bright and clear high viscosity index base oil having viscosity at 40°C of 50.7 to 54.0 mm²/s (ASTM D445), viscosity index of 89 to 96 (ASTM D2270) and minimum flash point of 221°C (ASTM 92)). The amount of each VI improver was varied so as to provide a lubricating oil composition having a kinematic viscosity of 14 centistokes (mm²/s) at 100°C. The multigrade lubricating oil compositions prepared in these examples contained 31.0%w of "HVI 250N" oil, 7.75 wt% of a commercially available additive package ("Lubrizol 7573A" (Trade Mark)), and 0.3 %w "Acryloid 160" (Trade Mark) pour point depressant. The viscosity index (VI), the cold cranking simulator (CCS) viscosity at -20°C, the engine oil pumpability (TP1) at -25°C using the mini-rotary viscometer (ASTM D4684), and the high temperature high shear rate (HTHSR) viscosity at 150°C at 1 x 10⁶seconds⁻¹ using the tapered bearing simulator (TBS) (ASTM D4683) were determined for each lubricating oil composition.

All of these examples produced lubricating oil compositions from cyclone finished polymer crumb. The lubricating oil compositions have good HTHSR viscosities and good low temperature viscosities. The data and results are summarised in Table 2.

### Comparative Examples D to F

In these comparative examples the star polymers produced in Comparative Examples A to C were used as VI improvers in a SAE 10W-40 multigrade lubricating oil composition as described for Examples 4-6. The data and results are summarised in Table 2.

**Table 2**

| Example | Polymer Example | Polymer (%w)* | CCS -20°C, cP (x 10⁻³ Pa s) | TP1 MRV, cP (x 10⁻³ Pa s) | VI | TBS cP (x 10⁻³ Pa s) |
|---|---|---|---|---|---|---|
| 4 | 1 | 0.95 | 3,210 | 168 | 155 | 3.46 |
| 5 | 2 | 1.03 | 3,360 | 197 | 155 | 3.48 |
| 6 | 3 | 0.97 | 3,340 | 203 | 154 | 3.49 |
| COMP. D | COMP. A | 1.19 | 3,140 | 189 | 156 | 3.68 |
| COMP. E | COMP. B | 1.02 | 3,320 | 172 | 155 | 3.51 |
| COMP. F | COMP. C | 0.97 | 3,460 | >300 | 154 | 3.52 |

| | | | | | | |
|---|---|---|---|---|---|---|
| * %w based on the total composition | | | | | | |

It can clearly be seen from Tables 1 and 2 above that the star polymers of Examples 1 to 3 according to the present invention are both cyclone finishable and possess good viscosity characteristics. In comparison, whereas the star polymers of Comparative Examples A and B possess acceptable viscosity characteristics, they are not however cyclone finishable. Conversely, the star polymer of Comparative Example C, whilst being cyclone finishable, does not possess acceptable viscosity characteristics (note, in particular, the poor performance in the engine oil pumpability (TP1) test).

## Claims

1. A star polymer produced by the process comprising the steps of:
(a) anionically polymerising isoprene and styrene to produce block copolymer molecules, each block copolymer molecule having an A-B structure wherein B is a block of polyisoprene having a number average molecular weight (MW_{I}) in the range from 30,000 to 70,000 and A is a block of polystyrene having a number average molecular weight (MW_{S}) in the range from 4,000 - (MW_{I}/30) to 3000 + (MW_{I}/30);
(b) coupling the block copolymer molecules with 2.5 or more moles of polyalkenyl coupling agent per mole of block copolymer molecules, to form a star polymer; and
(c) selectively hydrogenating the star polymer such that at least 95% of isoprene units (olefinic unsaturation) and less than 15% of styrene units (aromatic unsaturation) are hydrogenated.

2. A star polymer according to claim 1, wherein the number average molecular weight of the polyisoprene block B is in the range from 30,000 to 60,000.

3. A star polymer according to claim 1 or claim 2, wherein the number average molecular weight of the polystyrene block A is in the range from 3,000 to 4,000.

4. A star polymer according to any one of claims 1 to 3, wherein the block copolymer molecules are coupled with 3 moles of polyalkenyl coupling agent per mole of block copolymer molecules.

5. A star polymer according to any one of the preceding claims, wherein the block copolymer molecules are coupled with divinylbenzene.

6. A star polymer according to any one of the preceding claims, wherein at least 98% of the olefinic unsaturation is hydrogenated.

7. A star polymer according to any one of the preceding claims, wherein less than 10% of the aromatic unsaturation is hydrogenated.

8. A process for the preparation of a star polymer as claimed in any one of claims 1 to 7, comprising the steps of:
(a) anionically polymerising isoprene and styrene to produce block copolymer molecules, each block copolymer molecule having an A-B structure wherein B is a block of polyisoprene having a number average molecular weight (MW_{I}) in the range from 30,000 to 70,000 and A is a block of polystyrene having a number average molecular weight (MW_{S}) in the range from 4,000 - (MW_{I}/30) to 3000 + (MW_{I}/30);
(b) coupling the block copolymer molecules with 2.5 or more moles of polyalkenyl coupling agent per mole of block copolymer molecules, to form a star polymer; and
(c) selectively hydrogenating the star polymer such that at least 95% of isoprene units (olefinic unsaturation) and less than 15% of styrene units (aromatic unsaturation) are hydrogenated.

9. A lubricating oil composition comprising a major amount of a lubricating oil and a minor amount of a star polymer as claimed in any one of claims 1 to 7.

10. A lubricating oil concentrate comprising 10 to 80%w, based on the total concentrate, of a star polymer as claimed in any one of claims 1 to 7.
